(19) Europäisches Patentamt
European Patent Office
Office européen des brevets

(11) Publication number: **0 101 660**
**A1**

(12) **EUROPEAN PATENT APPLICATION**

(21) Application number: **83630125.9**

(22) Date of filing: **12.08.83**

(51) Int. Cl.³: **B 29 H 17/00**, B 60 C 1/00

(30) Priority: **20.08.82 IL 66592**

(43) Date of publication of application: **29.02.84**
**Bulletin 84/9**

(84) Designated Contracting States: **AT DE FR GB IT LU NL SE**

(71) Applicant: **ALLIANCE TIRE & RUBBER COMPANY LTD., P.O. Box 48, Hadera (IL)**

(72) Inventor: **Hofstetter, Moshe, 40 Yair Street, Ramat-Gan (IL)**
Inventor: **Levinger, Aharon, Haatzmaut Street, Pardess Hanna (IL)**
Inventor: **Sharon, Ithamar, Dr., 22 Habrosh Street, Nof-Yam (IL)**

(74) Representative: **Schmitz, Jean-Marie et al, Office Dennemeyer S.à.r.l. 21-25 Allée Scheffer P.O. Box 41, Luxembourg (LU)**

(54) **Method of making a pneumatic tire and pneumatic tires made in carrying out such method.**

(57) A method of making a pneumatic tire including a rubber tread and a casing of polyurethane elastomer is characterized by the steps of: (a) forming an endless loop having an outer face (2) of a rubber tread and an inner face (6) of a compound containing rubber, resorcinol, a formaldehyde donor, and an activated silica filter; (b) vulcanizing the rubber tread endless loop by heating same to a first predetermined temperature; (c) placing the vulcanized rubber tread endless loop into a tire mold; (d) heating the tire mold to a second predetermined temperature; and (e) casting the polyurethane elastomer casing to the vulcanized rubber tread while the mold and tread are at the second predetermined temperature, which second predetermined temperature is sufficiently high to cure the polyurethane elastomer but is below the first pretermined temperature.

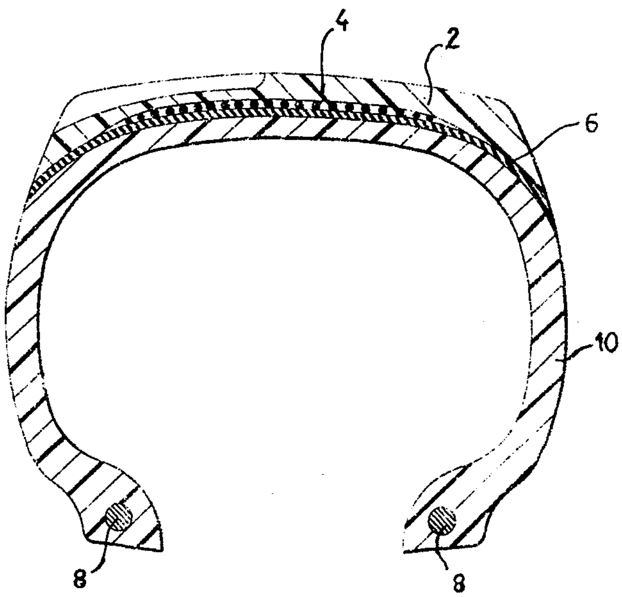


EP 0 101 660 A1

METHOD OF MAKING A PNEUMATIC TIRE AND PNEUMATIC TIRES MADE IN CARRYING OUT SUCH METHOD.

The present invention relates to the manufacture and construction of pneumatic tires for vehicles, and particularly to castable, cordless, pneumatic tires.

The conventional method of manufacturing vehicle tires in common use today involves applying, onto a rotating building drum, a plurality of strips of rubber or rubberized fabric, one over the other. On top of the carcass or casing so build up, a heavy rubber strip is applied to serve as the tire tread. The tire is then removed from the building drum and is transferred to the curing press wherein it is cured at a high pressure and temperature of about 160$^{o}$C.

Such a conventional method of manufacturing tires involves considerable time and labor, and therefore very substantial efforts have been devoted in recent years to simplifying this method, by casting tires from an elastomer having all the required physical and dynamic properties to satisfy the requirements of a modern pneumatic tire. Several polyurethane elastomers of the polyester and polyester-based types, are known which possess the properties required for a tire casing, namely, very high modulus, tensile strength, tear and impact resistance, as compared to rubber. However, none of these known elastomers has the required traction property of tread rubber. A number of attempts have been made to combine the advantages of the cast tire casing with the conventional rubber tread. One such attempt is described in U.S. Patent 3 888 291 involving a process in which a tire casing is cast from the polyurethane elastomer, an uncured rubber tread stock of conventional tread stock formulation is cemented to the cast casing, and both are then cured in a mold. Insofar as we are aware, however, tires constructed in accordance with the method described in that patent have not come into any commercial use at the present time as, presumably, they have not been able to meet the very strict requirements of modern vehicle

tires.

Other methods proposed for making cast cordless pneumatic tires for vehicles are described in U.S. Patents 3 686 389; 3 701 374 and 4 029 730, but these too have not yet come into commercial use, as far as we are aware, presumably for the same reason.

An object of the present invention is to provide a method of making cast cordless tires according to the general technique described in U.S.A. Patent 3 888 291, but involving a number of important improvements, as will be described more particularly below. Another object of the present invention is to provide a cast, cordless, pneumatic tire made in accordance with the novel method of the present invention.

According to one broad aspect of the present invention, there is provided a method of making a pneumatic tire including a rubber tread and a casing of a polyurethane elastomer, characterized in (a) forming an endless loop having an outer face of a rubber tread and an inner face of a compound containing rubber, resorcinol, a formaldehyde donor, and an activated silica filler; (b) vulcanizing said rubber tread endless loop by heating same to a first predetermined temperature; (c) placing said vulcanized rubber tread endless loop into a tire mold; (d) heating said tire mold to a second predetermined temperature; and (e) casting the polyurethane elastomer casing to the vulcanized rubber tread while the mold and tread are at said second predetermined temperature, said second predetermined temperature being sufficiently high to cure said polyurethane elastomer but below said first predetermined temperature.

According to a further important feature of the present invention, the rubber tread is lined along its inner face with a steel belt before the rubber tread is vulcanized, whereby the steel belt maintains the dimensional integrity of the rubber tread and prevents shrinkage

thereof as a result of the vulcanization.

According to another aspect of the invention, there is provided a pneumatic tire comprising a tire casing formed essentially of a polyurethane elastomer, a pre-vulcanized rubber tread integrally bonded to the casing , and an intermediate layer of a compound including rubber , resorcinol, a formaldehyde donor, and an activated silica filler.

It has been found that the foregoing features enable cordless cast tires to be constructed which provide greatly improved performance when compared to tires constructed in accordance with any prior method known to us, and particularly the method of U.S.A. Patent 3 888 291, especially in the following respects:

First , it has been found that by pre-vulcanizing the rubber tread before applying the polyester casing, the casing may be cured at a substantially lower temperature than in U.S.A. Patent 3 888 291. Thus, in the example described in that patent the tread rubber and polyurethane casing are cured at a temperature of about 150$^{\circ}$ C for approximately 30 minutes; whereas in the present invention, by prevulcanizing the rubber tread, the polyurethane may be cured at a substantially lower temperature, e.g., between 70-90$^{\circ}$C, preferably at 80$^{\circ}$C, and for a substantially shorter period of time, e.g., 2-4 minutes. This lower curing temperature of the tire eliminates the possibility of deterioration of the elastomer during the curing treatment.

Another important advantage is provided by the inclusion of the intermediate layer of the compound of rubber, resorcinol, a formaldehyde donor, and an activated silica filler. Particularly good results have been observed in the use of such a compound; especially when the formaldehyde donor is hexamethylene tetramine, in that it has been found that this intermediate layer produces an intimate bonding of the prevulcanized rubber tread to the polyurethane casing. In this respect, it is appreciated that resorcinol-formaldehyde -donor-silica compounds have been used before in promoting the adhesion of rubber to steel, but it is believed that the use of such a mixture in the method of the present invention, for promoting the adhesion of rubber to polyurethane involves a different mechanism of action, as follows:

Thus, it is believed that the above components form a chemical bond with the active groups in the polyurethane so that the OH groups in the resorcinol react with the NCO groups in the polyurethane to form durable crosslinks.

| | | | | |
|---|---|---|---|---|
| - OH | + | - NCO | $\longrightarrow$ | - NH$\overset{O}{\overset{\parallel}{C}}$ - |
| resorcinol | | prepolymer | | urethane |

At the same time it is believed that the NCO groups of the polyurethane react with the amine groups of the hexamethylene tetramine to form additional crosslinks

| | | | | |
|---|---|---|---|---|
| - $NH_2$ | + | - NCO | $\longrightarrow$ | NH$\overset{O}{\overset{\parallel}{C}}$HN |
| hexamethylene tetramine | | prepolymer | | urea |

In addition , there is a positive affinity between the polarity of the polyurethane and the polarity of the activated silica filler which further strengthens the bond between the tread and the casing.

Further, reinforcing the rubber tread with a belt provides the important advantage of permitting high inflation pressure necessary in high load applications, while preventing the tendency of the tire to grow in circumference.

However, when the belt is of steel, as distinguished from fabric, and when it is applied to the inner face of the rubber tread before it is vulcanized , it has been found that the steel belt produces a further important advantage, namely of maintaining the dimensional

integrity of the rubber tread and preventing shrinkage thereof as a result of the vulcanization of the rubber tread. Thus, by avoiding this shrinkage, either the same mold as used in vulcanizing the rubber tread, or another mold of identical cavity dimensions, can be used for casting and curing the polyurethane casing.

Particularly good results have been found to be present when the polyurethane is a prepolymer of poly (tetramethylene glycol) and tolylene diisocyanate, and a curing agent of di-ethylene toluene diamine, and is cured at a temperature of about 80$^{o}$C, which is substantially below the vulcanization temperature (about 160$^{o}$ C) of the rubber tread.

In general, it has been found that the tire manufactured in accordance with the above-described features of the invention , and particularly in accordance with the example to be described more particularly below, permits the construction of cast, cordless vehicle tires having traction comparable to rubber tires, improved stability and cornering , and protection against tire tendency to grow under high inflation pressure when compared to the previously-known cast cordless tires. In addition, such tires have been found to have flat running ability, such as to obviate the need, in most cases, for a spare tire.

Further features and advantages of the invention will be apparent from the description below.

The invention is herein described, by way of example only, with reference to the attached single figure of drawings and the following specific example of one construction and method in accordance with the present invention.

First, over a collapsible drum is wound a strip of steel fabric impregnated with the above-mentioned rubber compound including rubber, resorcinol, a formaldehyde-donor, and an activated silica filler. One example of the formulation of such a compound is set forth below. The steel fabric or belt may include two layers running circumferentially or diagonally at a small angle, e.g. 17-20°.

Over the impregnated steel fabric or belt is applied a strip of a conventional rubber tread compound, such as one of those mentioned in the above-cited U.S. Patent 3 888 291. The two strips are then "stitched" together to remove the air between them and the ends are spliced, thereby forming a closed loop having an inner face 6 constituted of the rubber-compound-impregnated steel fabric or belt 4, and an outer face 2 constituted of the uncured rubber tread.

The closed loop vulcanized tread is then removed from the collapsible drum, and placed in a tire mold of exactly the same dimensions as the drum on which the closed loop was formed. The tire mold is then heated to a temperature of about 165°C, while a pressure of 1.38 - 2.76 MPa is applied, for a period of about 15-20 minutes in order to vulcanize the rubber tread and the rubber compound of the impregnated steel belt.

The vulcanized tread is then thoroughly washed and mechanically cleaned to remove all traces of dirt and oil. Its inner face is treated with a known solution, such as Chemlock 7701, which chemically alters the vulcanized rubber surface to create a more bondable area. A thin adhesive layer of another known composition, such as Chemlock 218, is then applied.

The tire mold is then heated to a temperature of about 80°C, and the polyurethane elastomer is cast under atmospheric pressure to form the tire casing bonded to the vulcanized rubber tread via the rubber compound of the intermediate steel belt layer.

The 80°C temperature of the mold is sufficient to cure the polyurethane elastomer, this taking only about 2-4 minutes, but is insufficient to deleteriously affect the pre-vulcanized rubber tread and the intermediate layer rubber compound bonding the tread to the polyurethane casing. This low curing temperature also eliminates the

possibility of deterioration of the polyurethane elastomer during the curing step. The presence of the steel belt was found to provide not only the usual advantage of permitting high inflation pressure, but also the further important advantage of maintaining the dimensional integrity of the rubber tread closed loop and preventing its shrinkage as a result of the vulcanization step. Thus, the same tire mold as used during the vulcanization step can also be used, and is preferably to be used, during the polyurethane casting step.

The presence of the intermediate layer of the compound of rubber, resorcinol, formaldehyde donor, and activated silica filler, was found to produce a very strong adhesion of the rubber tread to the polyurethane casing, as discussed above.

In the preferred example, the formaldehyde donor is hexamethylene tetramine. The quantity of resorcinol by weight is preferably approximately double the quantity of the formaldehyde donor; and the quantity of resorcinol and formaldehyde donor together is about 2-6 % by weight of the quantity of the rubber in the mixture. In addition, the activated silica is preferably present from about 10-20% by weight of the quantity of natural rubber in the mixture.

Following is one example of such a compound formulation, in which the quantity of both the resorcinol and the formaldehyde donor hexamethylene-tetramine is approximately 5% (exactly 4.8% ) of the natural rubber, and wherein the activated silica ("Vulkasil") is 14% of the natural rubber in the mixture:

| Material | Parts by weight |
|---|---|
| natural rubber | 100 |
| S.R.F. carbon black | 50 |
| zinc oxide | 8 |
| stearic acid | 1.6 |
| "Vulkasil" S or C (activated silica filler) | 14 |
| aromatic oil | 2.5 |

| Material | Parts by weight |
| --- | --- |
| alkyl phenol-acetylene resin (tackifier) | 2 |
| hexamethylene tetramine | 1.6 |
| resorcinol | 3.2 |
| sulfur | 6 |
| benzothiazyl-2-dicyclohexyl-sulphenamide (accelerator) | 1.5 |
| N-isopropy-phenyl-p-phenylene diamine (anti-oxidant) | 1.8 |
| Mooney Viscosity (ML-1+4/100$^{o}$C) | 65 |

The vulcanized closed-loop tread 2 is placed in the tire mold together with the tire steel beads 8, whereupon the mold is hermetically closed before being heated to the 80$^{o}$C temperature. As one example, the liquid polyurethane mixture injected to form the tire casing or carcass 10, may be a prepolymer of poly(tetramethylene glycol) and tolylene diisocyanate, and a curing agent of diethylene toluene diamine.

As a variation of the tread preparation step, the above-mentioned intermediate layer compound may be applied as a separate strip 6 on the drum, and then the steel belt 4 may be applied thereover as a separate distinct layer, followed by the application of the unvulcanized rubber tread.

CLAIMS:

1. A method of making a pneumatic tire including a rubber tread and a casing of a polyurethane elastomer, characterized in :

(a) forming an endless loop having an outer face (2) of a rubber tread and an inner face (6) of a compound containing rubber, resorcinol, a formaldehyde donor, and an activated silica filler,

(b) vulcanizing said rubber tread endless loop by heating same to a first predetermined temperature;

(c) placing said vulcanized rubber tread endless loop into a tire mold;

(d) heating said tire mold to a second predetermined temperature; and

(e) casting the polyurethane elastomer casing to the vulcanized rubber tread while the mold and tread are at said second predetermined temperature, sais second predetermined temperature being sufficiently high to cure said polyurethane elastomer but below said first predetermined temperature.

2. The method according to claim 1, characterized in that said rubber tread (2) is lined along its inner face (6) with a steel belt (4) before the rubber tread is vulcanized, whereby the steel belt (4) maintains the dimensional integrity of the rubber tread (2) and prevents shrinkage thereof as a result of the vulcanization of the rubber tread (2).

3. The method according to claim 2, characterized in that said steel belt (4) includes at least one layer of steel wires running circumferentially, or diagonally, at a small angle.

4. The method according to either of claims 2 or 3, characterized in that said polyurethane elastomer includes a prepolymer of poly(tetramethylene glycol) and tolylene diisocyanate, and a curing agent of diethylene toluene diamine.

5. The method according to any one of claims 2-4, characterized in that said compound is applied as a separate layer between the inner face (6) of the rubber tread (2) and the steel belt (4).

6. The method according to any one of claims 2-4, characterized in that said compound is applied by impregnating said steel belt (4) with said compound.

7. The method according to any one of claims 2-6, characterized in that the quantity of resorcinol by weight is approximately double the quantity of the formaldehyde donor, and the quantity of resorcinol and formaldehyde donor together is about 2-6% by weight of the quantity of the rubber in said compound.

8. The method according to any one of claims 2-7, characterized in that the activated silica in said compound is present from about 10-20% by weight of the quantity of the rubber in said compound.

9. A pneumatic tire characterized in comprising a tire casing (10) formed essentially of a polyurethane elastomer, a prevulcanized rubber tread (2) integrally bonded to said casing (10) and an intermediate layer of a compound of rubber, resorcinol, a formaldehyde donor, and an activated silica filler.

10. A pneumatic tire according to claim 9, characterized in further including a steel belt (4) lining the inner face (6) of said prevulcanized rubber tread (2) and bonded to said casing (10) of polyurethane elastomer.

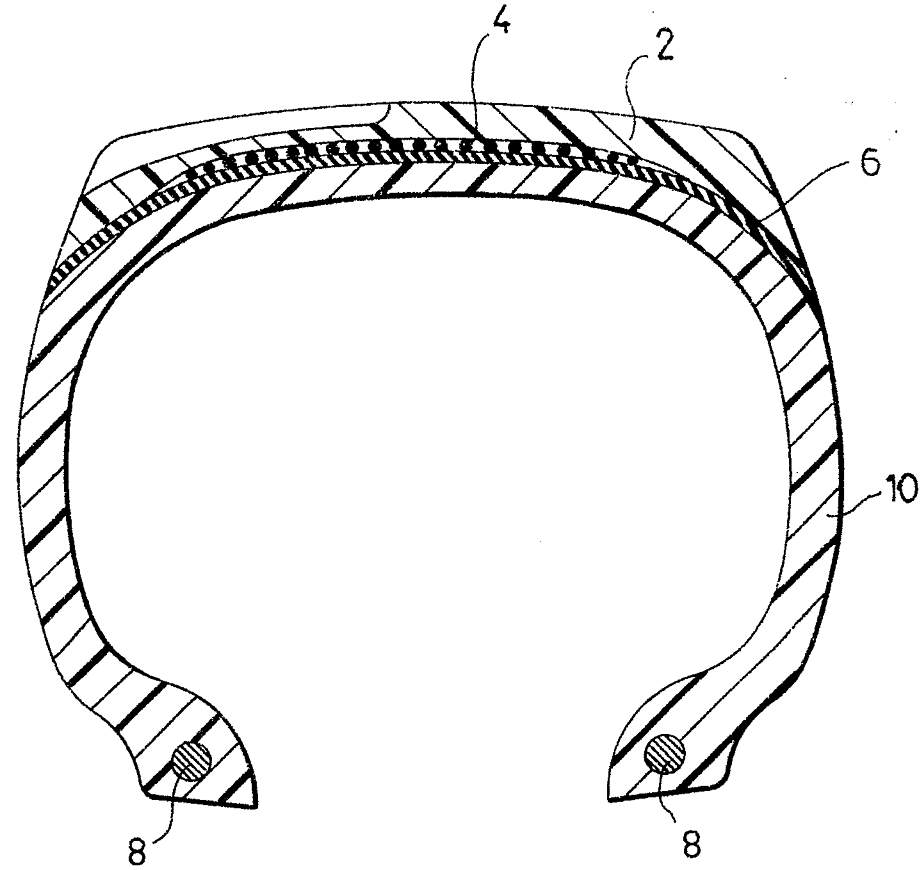


Fig. 1

0101660

European Patent Office

# EUROPEAN SEARCH REPORT

Application number

EP 83630125.9

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| A | EP - A1 - 0 006 425 (THE FIRESTONE TIRE & RUBBER COMPANY)<br>* Fig. 3; page 4, line 28 - page 5, line 29; page 8, lines 11-32; page 10, line 14 - page 11, line 8 *<br>-- | 1-3,5, 9,10 | B 29 H 17/00<br>B 60 C 1/00 |
| A | US - A - 4 257 836 (BENEZE)<br>* Fig. 2; column 3, lines 1-58; column 4, lines 28-37, lines 45-68; column 5, lines 1-17; column 9, lines 58-68 *<br>-- | 1-3,5, 9,10 | |
| D,A | US - A - 3 701 374 (TMCGILLVARY)<br>* Column 2, line 46 - column 3, line 67; column 7, lines 16-35 *<br>& US-E-28 424<br>-- | 1,4 | **TECHNICAL FIELDS SEARCHED (Int. Cl. 3)** |
| A | DE - A1 - 2 633 749 (THE GOODYEAR TIRE & RUBBER COMPANY)<br>* Claim 1 *<br>-- | 1,4 | B 29 H<br>B 60 C<br>C 08 J<br>C 08 L |
| A | DE - A1 - 2 823 966 (METZELER KAUTSCHUK AG)<br>* Claims 1-4,7 *<br>-- | 1,6-8 | |
| D,A | US - A - 3 888 291 (HERZLICH, et al.)<br>-- | | |

The present search report has been drawn up for all claims

| Place of search | Date of completion of the search | Examiner |
|---|---|---|
| VIENNA | 16-11-1983 | WIDHALM |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0101660

European Patent Office

# EUROPEAN SEARCH REPORT

Application number

EP 83630125.9

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| D,A | US - A - 4 029 730 (SCHROEDER)<br>-- | | |
| A | GB - A - 1 118 428 (CONTINENTAL GUMMI-WERKE AKTIENGESELLSCHAFT)<br>---- | | |
| | | | TECHNICAL FIELDS SEARCHED (Int. Cl. 3) |

EPO Form 1503.2 06.78